# EUROPEAN PATENT APPLICATION

(11) **EP 2 772 662 A1**
(43) Date of publication of application: **03.09.2014**
(21) Application number: 12843589.8
(22) Date of filing: 15.10.2012
(51) Int. Cl.: F16G 5/16, B29D 29/08

(54) **V-BELT FOR TRANSMITTING HIGH LOAD AND METHOD FOR MANUFACTURING SAME**

(30) Priority: 26.10.2011 JP 2011234937
(71) Applicant: Bando Chemical Industries, Ltd., Kobe-shi, Hyogo 650-0047 (JP)
(72) Inventor: SAKANAKA, Hiroyuki, Kobe-shi Hyogo 650-0047 (JP); TACHIBANA, Hiroyuki, Kobe-shi Hyogo 650-0047 (JP); HATA, Katsuhiko, Kobe-shi Hyogo 650-0047 (JP)
(74) Representative: Grünberg, Thomas
(86) International application number: PCT/JP2012/006598
(87) International publication number: WO 2013/061538

(57) **Abstract**

A high load transmission V-belt (B) includes: an endless tension band (10); and a plurality of blocks (20) arranged side by side in a longitudinal direction of the tension band and each engaged with the tension band (10). Each of the plurality of blocks (20) has a reinforcing structure member (23) comprised of carbon fibers, and a resin coating layer (24) provided so as to coat the reinforcing structure member (23).

## Description

### TECHNICAL FIELD

The present invention relates to high load transmission V-belts and manufacturing methods thereof.

### BACKGROUND ART

High load transmission V-belts in which a plurality of blocks are arranged side by side in the longitudinal direction of endless tension bands and each of the blocks is engaged with the tension bands are known as high load transmission V-belts for use in belt-type continuously variable transmission apparatuses for automobiles etc.

Patent Document 1 discloses such a high load transmission V-belt in which the blocks are formed by coating an aluminium reinforcing material with a resin coating layer.

### CITATION LIST

### PATENT DOCUMENT

PATENT DOCUMENT 1: Japanese Unexamined Patent Publication No. 2010-60114

### SUMMARY OF THE INVENTION

A high load transmission V-belt according to the present invention includes: an endless tension band; and a plurality of blocks arranged side by side in a longitudinal direction of the tension band and each engaged with the tension band, wherein each of the plurality of blocks has a reinforcing structure member comprised of carbon fibers, and a resin coating layer provided so as to coat the reinforcing structure member.

A method for manufacturing a high load transmission V-belt according to the present invention includes: a block molding step of placing a reinforcing structure member comprised of carbon fibers in a cavity of a block forming mold, and supplying an unsolidified resin material into the cavity.

### BRIEF DESCRIPTION OF THE DRAWINGS

[FIG. 1] FIG. 1 is a perspective view of a high load transmission V-belt.
[FIG. 2] FIG. 2 is a cross-sectional view taken along line II-II in FIG. 1.
[FIG. 3] FIG. 3 is a side view of a tension band.
[FIG. 4] FIG. 4 is a side view of a block.
[FIG. 5] FIGS. 5A and 5B are diagrams showing how carbon fiber threads are fixed to a sheet-like base material.
[FIG. 6] FIGS. 6A to 6D are diagrams showing alignment patterns of the carbon fiber threads.
[FIG. 7] FIGS. 7A and 7B are diagrams showing pulley layouts of a belt-type continuously variable transmission apparatus.
[FIG. 8] FIG. 8 is a diagram showing forming of the block.
[FIG. 9] FIGS. 9A to 9C are schematic diagrams of a belt running testing machine.

### DESCRIPTION OF EMBODIMENTS

An embodiment will be described in detail below with reference to the accompanying drawings.

### (High Load Transmission V-Belt B)

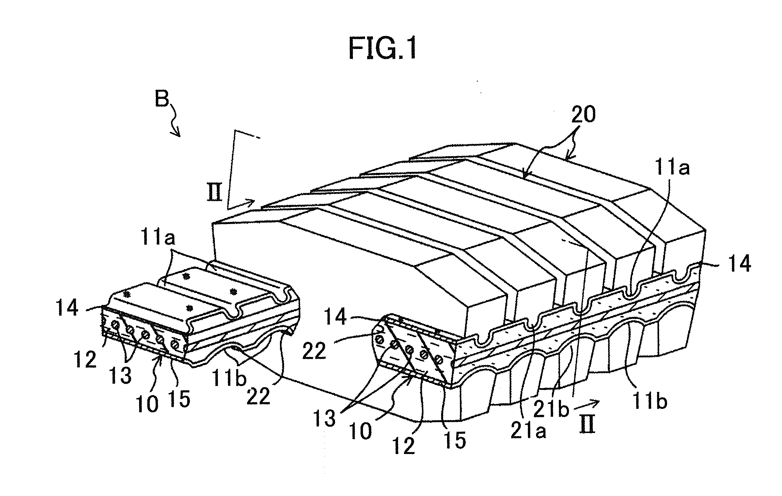

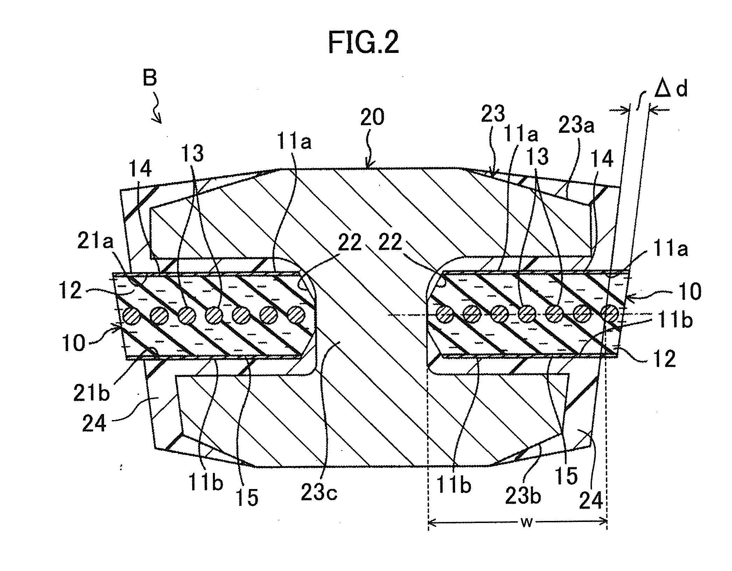

FIGS. 1 and 2 show a high load transmission V-belt B according to the present embodiment. The high load transmission V-belt B according to the present embodiment is used in, e.g., belt-type continuously variable transmission apparatuses for automobile etc.

The high load transmission V-belt B according to the present embodiment includes a pair of endless tension bands 10 and a plurality of blocks 20. The plurality of blocks 20 are arranged side by side in the longitudinal direction of the pair of tension bands 10 and are placed at a fixed pitch so as to be separated from each other. Each block 20 is engaged with and fixed to the pair of tension bands 10. For example, in this high load transmission V-belt B, the belt length (dimension in the longitudinal direction of the belt at a cord center position, described below, in the tension band 10) is 480 to 750 mm, the belt pitch width (dimension in the width direction of the belt at the cord center position in the tension band 10) is 20 to 30 mm, the belt thickness is 10 to 16.5 mm, the number of blocks 20 is 96 to 375, the block pitch is 2 to 5 mm, and the interval between the blocks 20 is 0.01 to 0.5 mm.

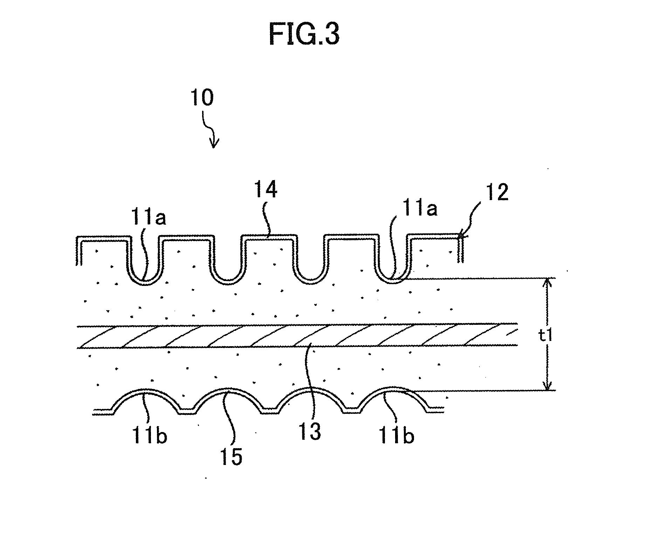

### FIG. 3 shows the tension band 10.

Each tension band 10 is formed in the shape of an endless flat band. In each tension band 10, the upper and lower parts of its one side portion are chamfered, and the other side portion is formed as a tilted surface. In each tension band 10, upper fitting recesses 11a as grooves extending in the width direction of the belt and having a U-shaped cross section are formed at a fixed pitch in the longitudinal direction of the belt in the upper surface (outer peripheral surface) of the tension band 10, and lower fitting recesses 11b as grooves extending in the width direction of the belt and having an arc-shaped cross section are formed at a fixed pitch in the longitudinal direction of the belt in the lower surface (inner peripheral surface) of the tension band 10 so as to correspond to the upper fitting recesses 11a. For example, each tension band 10 has a length of 480 to 750 mm, a width of 6 to 13 mm, and a thickness of 1.0 to 5.0 mm (preferably 1.5 to 3.0 mm). In particular, the thickness t₁ of the thinnest portion between the bottom of the upper fitting recess 11a and the bottom of the lower fitting recess 11b is, e.g., 0.606 to 3.0 mm (preferably 0.606 to 1.5 mm).

A body of each tension band 10 is comprised of a shape retaining rubber layer 12. A cord 13 placed in a helical pattern having a pitch in the width direction of the belt is embedded substantially in the center in the belt thickness direction of the shape retaining layer 12. An upper reinforcing cloth 14 is bonded to the shape retaining rubber layer 12 so as to cover the upper surface of the shape retaining layer 12. A lower reinforcing cloth 15 is bonded to the shape retaining rubber layer 12 so as to cover the lower surface of the shape retaining rubber layer 12. Each tension band 10 may not include the upper reinforcing cloth 14 and the lower reinforcing cloth 15, and may be formed only by the shape retaining rubber layer 12 and the cord 13.

The shape retaining rubber layer 12 is comprised of a rubber composition produced by kneading a mixture of a rubber component and various compounding agents to form an uncrosslinked rubber composition, heating and pressing the uncrosslinked rubber composition, and crosslinking the uncrosslinked rubber composition by a crosslinker.

Examples of the rubber component include hydrogenated acrylonitrile rubber (H-NBR), ethylene-α-olefin elastomers such as an ethylene-propylene copolymer (EPR), an ethylene-propylene-diene terpolymer (EPDM), an ethylene-octene copolymer, and an ethylene-butene copolymer, chloroprene rubber (CR), chlorosulfonated polyethylene rubber (CSM), etc. The rubber composition may be hydrogenated acrylonitrile rubber (H-NBR) reinforced by an unsaturated carboxylic acid metal salt such as zinc dimethacrylate or zinc diacrylate. The rubber component may be comprised of either a single substance or a mixture of a plurality of substances.

Examples of the compounding agents include a vulcanization accelerator, a plasticizer, a reinforcing material, an antioxidant, a co-crosslinker, and a crosslinker.

Examples of the vulcanization accelerator include metal oxides such as magnesium oxide and zinc oxide (zinc flower), metal carbonates, fatty acids such as stearic acid, and derivatives thereof. The vulcanization accelerator may be comprised of either a single substance or a plurality of substances. For example, 5 to 15 parts by mass of the vulcanization accelerator is added per 100 parts by mass of the rubber component.

Examples of the plasticizer include a phthalic acid derivative, an isophthalic acid derivative, a tetrahydrophthalic acid derivative, an adipic acid derivative, an azelaic acid derivative, a sebacic acid derivative, a dodecane-2-acid derivative, a maleic acid derivative, a fumaric acid derivative, a trimellitic acid derivative, a pyromellitic acid derivative, a citric acid derivative, an itaconic acid derivative, an oleic acid derivative, a ricinoleic acid derivative, a stearic acid derivative, a sulfonic acid derivative, a phosphoric acid derivative, a glutaric acid derivative, a glycol derivative, a glycerin derivative, a paraffin derivative, and an epoxy derivative. The plasticizer may be comprised of either a single substance or a plurality of substances. For example, 5 to 15 parts by mass of the plasticizer is added per 100 parts by mass of the rubber component.

Examples of carbon black as the reinforcing material include channel black, furnace black such as SAF, ISAF, N-339, HAF, N-351, MAF, FEF, SRF, GPF, ECF, and N-234, thermal black such as FT and MT, and acetylene black. Silica is another example of the reinforcing material. The reinforcing material may be comprised of either a single substance or a plurality of substances. For example, 5 to 100 parts by mass of the reinforcing material is added per 100 parts by mass of the rubber component. Other examples of the reinforcing material include organic short fibers such as aramid short fibers and nylon short fibers, and inorganic short fibers such as carbon short fibers. These reinforcing short fibers may be added or may not be added to the rubber component. In the case where the reinforcing short fibers are added, these short fibers are preferably provided so as to be aligned in the width direction of the belt.

Examples of the antioxidant include amines, quinolines, hydroquinone derivatives, phenols, and phosphite esters. The antioxidant may be comprised of either a single substance or a plurality of substances. For example, 0.1 to 10 parts by mass of the antioxidant is added per 100 parts by mass of the rubber component.

Examples of the co-crosslinker include a bismaleimide-based co-crosslinker, TAIC, 1,2-polybutadiene, an unsaturated carboxylic acid metal salt, oximes, guanidine, and trimethylolpropane trimethacrylate. Of these examples, the bismaleimide-based co-crosslinker is preferable. Specific examples of the bismaleimide-based co-crosslinker include N,N-m-phenylene bismaleimide, 4,4'-diphenylmethane bismaleimide, 4-methyl-1,3-phenylene bismaleimide, 1,6'-bismaleimide-(2,2,4-trimethyl)hexane, bisphenol A diphenyl ether bismaleimide, 3,3'-dimethyl-5,5'-diethyl-4,4'-diphenylmethane bismaleimide, 4,4'-diphenyl ether bismaleimide, 4,4'-diphenyl sulfone bismaleimide, 1,3-bis(3-maleimide phenoxy)benzene, and 1,3-bis(4-maleimide phenoxy)benzene. The co-crosslinker may be comprised of either a single substance or a plurality of substances. For example, 0.5 to 15 parts by mass of the co-crosslinker is added per 100 parts by mass of the rubber component.

Examples of the crosslinker include sulfur and an organic peroxide. Only sulfur may be used as the crosslinker, or only the organic peroxide may be used as the crosslinker. Alternatively, combination of sulfur and the organic peroxide may be used as the crosslinker. In the case of using sulfur as the crosslinker, 0.1 to 5 parts by mass of sulfur is preferably added per 100 parts by mass of the rubber component. In the case of using the organic peroxide as the crosslinker, 0.1 to 10 parts by mass of the organic peroxide, for example, is added per 100 parts by mass of the rubber component. The crosslinker is preferably the organic peroxide in view of heat resistance. Examples of the organic peroxide include diacyl peroxide, peroxyester, t-butyl cumyl peroxide, dicumylperoxide (DCP), 2,5-dimethyl-2,5-di(t-butylperoxy)hexane-3,1,3-bis(t-butylperoxyisopropyl)benzene, α,α'-bis(t-butylperoxide)diisopropylbenzene, and 1,1-dibutylperoxy-3,3,5-trimethylcyclohexane.

The cord 13 is formed by performing an adhesion treatment on twisted yarn or braided cord of high strength fibers such as aramid fibers, PBO fibers, or carbon fibers. For example, the cord 13 is formed by a filament bundle of 800 to 1200 dtex, and the outer diameter thereof is 0.5 to 1.4 mm.

The adhesion treatment of the cord 13 is comprised of a first treatment of heating the twisted yarn or braided cord after soaking it in a treatment solution, namely an epoxy solution or an isocyanate solution, and a second treatment of heating the twisted yarn or braided cord after soaking it in an RFL aqueous solution. A third treatment of drying the twisted yarn or braided cord after soaking it in rubber cement may be performed after the second treatment. However, it is preferable not to perform the third treatment.

The treatment solution that is used in the first treatment is an aqueous solution of an epoxy compound or an isocyanate compound, or a solution containing toluene, methyl ethyl ketone, etc. as a solvent.

The RFL aqueous solution that is used in the second treatment is a mixed solution of a resorcin (R)-formalin (F) initial condensation product aqueous solution and rubber latex (L). Preferably, this rubber latex is carboxylated hydrogenated nitrile rubber (carboxylated H-NBR) latex.

The rubber cement that is used in the third treatment is a solution of rubber and resin in a solvent such as toluene or methyl ethyl ketone, or a commercially available rubber adhesive.

Each of the upper and lower reinforcing cloths 14, 15 is produced by performing a first treatment of heating a woven fabric, knitted fabric, or nonwoven fabric of aramid fibers, nylon fibers, etc. after soaking it in an epoxy solution or an isocyanate solution, a second treatment of heating the woven fabric, knitted fabric, or nonwoven fabric after soaking it in an RFL aqueous solution, and as necessary, a third treatment of drying the woven fabric, knitted fabric, or nonwoven fabric after soaking it in rubber cement or coating it with the rubber cement. For example, each of the upper and lower reinforcing cloths 14, 15 has a thickness of 0.2 to 0.4 mm.

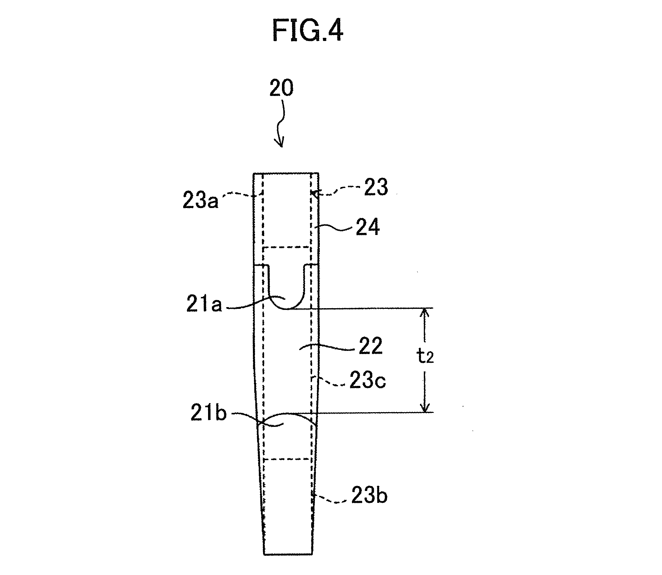

### FIG. 4 shows the block 20.

Each block 20 is a trapezoidal plate-like member whose upper base is longer than the lower base as viewed in plan, and which has an "H" shape with a laterally opening slit-like fitting portion 22 formed in both side surface portions 21 in the width direction of the belt. Each block 20 is formed so that a portion above the fitting portion 22 has a uniform thickness and a portion below the fitting portion 22 becomes thinner toward the lower end of the block 20 as viewed from the side. For example, each block 20 has a height of 10 to 16.5 mm, a width of 20 to 30 mm, and a thickness of 2 to 5 mm. For example, the angle between the side portions, i.e., the belt angle, is 15 to 26°.

Each fitting portion 22 of each block 20 is formed so as to extend horizontally with a uniform space from its inner part located closer to the center of the block 20 to the opening in the side portion of the block 20. Each fitting portion 22 has an upper fitting protrusion 22a formed on its upper surface as a ridge having a semicircular cross section and extending in the width direction of the belt, and a lower fitting protrusion 22b formed on its lower surface as a ridge having an arc-shaped cross section and extending in the width direction of the belt. The inner part of each fitting portion 22 is formed by a surface extending continuously with the upper surface of the fitting portion 22 and tilted toward the center of the block 20 and a surface extending continuously with this surface and tilted outward so as to extend continuously with the lower surface of the fitting portion 22. For example, each fitting portion 22 has a clearance t₂ of 1 to 3 mm in the thickness direction of the belt, and a depth of 2 to 5 mm in the width direction of the belt.

Each block 20 is configured so that a reinforcing structure member 23 placed in the center as a framework is coated with a resin coating layer 24. The entire reinforcing structure member 23 need not necessarily be coated with the resin coating layer 24. The reinforcing structure member 23 need only be coated with the resin coating layer 24 so as to form at least contact portions with the tension bands 10 and the side surface portions 21 forming pulley contact surfaces (the upper side surface portion above the fitting portion 22 and the lower side surface portion below the fitting portion 22). The remaining part of the reinforcing structure member 23 may be exposed.

Like the block 20, the reinforcing structure member 23 has an "H" shape, and is configured so that the center portions of upper and lower beams 23a, 23b extending in the width direction of the belt are connected in the vertical direction by a center pillar 23c. For example, the upper beam 23a of the reinforcing structure member 23 has a height of 5.0 to 9.5 mm and the lower beam 23b thereof has a height of 5.0 to 9.5 mm.

The reinforcing structure member 23 is comprised of carbon fibers. The carbon fibers may be polyacrylonitrile-based carbon fibers (PAN-based carbon fibers), pitch-based carbon fibers, or a mixture thereof. It is desirable to use the carbon fibers surface-treated with a silane coupling agent etc. For example, the filament diameter of the carbon fibers is 4 to 20 µm.

The reinforcing structure member 23 may be comprised of filament yarns of carbon fibers, or may be comprised of spun yarns of carbon fibers. The filament yarns of the carbon fibers may be twisted or non-twisted filament yarns. The filament or spun yarns of the carbon fibers may have carbon fibers wrapped therearound. For example, the filament or spun yarns of the carbon fibers have fineness of 50 to 2,000 tex.

The reinforcing structure member 23 may be comprised of composite yarns of the filament or spun yarns of the carbon fibers and fibers other than the carbon fibers. Examples of the fibers other than the carbon fibers include synthetic fibers such as polyethylene fibers, polypropylene fibers, polyester fibers, nylon fibers, aramid fibers, and PBO fibers, natural fibers such as cotton and hemp, glass fibers, and metal fibers such as steel wires. Of these examples, thermoplastic resin fibers that melt at a forming temperature are preferable due to improved integrity because the thermoplastic resin fibers melt to be compatible with the resin coating layer 24 upon formation of the blocks. The composite yarns may be the filament or spun yarns of the carbon fibers with the fibers other than the carbon fibers being vertically attached inside or outside the fiber bundle, may be the filament or spun yarns of the carbon fibers which have the fibers other than the carbon fibers being wrapped therearound, or may be a combination thereof. In the configuration in which the filament or spun yarns of the carbon fibers have the fibers other than the carbon fibers vertically attached inside or outside the fiber bundle, the filament or spun yarns of the carbon fibers and the fibers other than the carbon fibers may be either twisted or non-twisted. The content of the carbon fibers in the composite yarns may be either higher or lower than that of the fibers other than the carbon fibers, or may be the same as that of the fibers other than the carbon fibers. For example, the fibers other than the carbon fibers have fineness of 50 to 30,000 tex. Such composite yarns are disclosed in Japanese Unexamined Patent Publication No. 2010-121250.

The reinforcing structure member 23 may be formed by knitting yarns in the form of braided cords formed by gathering a plurality of filament or spun yarns of the carbon fibers.

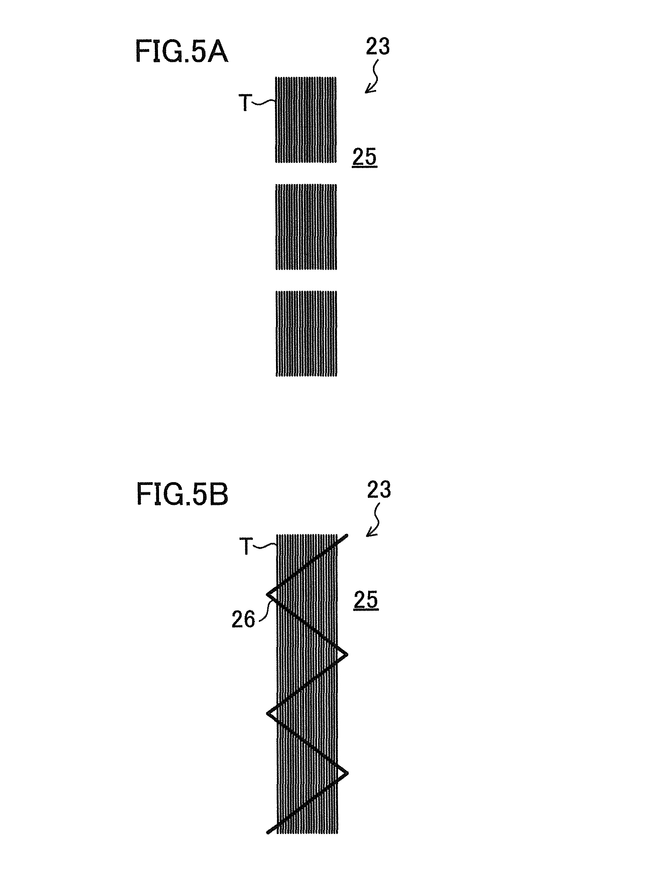

As shown in FIGS. 5A and 5B, the reinforcing structure member 23 may be formed by fixing the filament yarns, spun yarns, composite yarns, or knitting yarns of the carbon fibers (hereinafter referred to as the "carbon fiber threads T") to a sheet-like base material 25 having a block shape. In a manufacturing method of a carbon fiber-reinforced resin molded article in which a plate-like prepreg having carbon fibers held together by an epoxy resin etc., is used for preforming, and the preform is then placed in an autoclave etc. to harden the resin, or a manufacturing method of a carbon fiber-reinforced resin molded article in which a woven fabric of carbon fibers etc. are cut into a predetermined shape and placed in a cavity of a mold, and an unsolidified resin material is supplied thereto and hardened, great loss of the carbon fibers is caused due to the preforming, the cutting of the woven fabric, etc. However, the use of the reinforcing structure member 23 having the carbon fiber threads T fixed to the sheet-like base material 25 can significantly reduce the loss of the carbon fibers as compared to these methods. Examples of the sheet-like base material 25 include a thermoplastic resin sheet such as a polyethylene resin sheet and a polypropylene resin sheet, and a woven fabric, knitted fabric, and nonwoven fabric comprised of synthetic fibers such as polyethylene fibers, polyester fibers, nylon fibers, aramid fibers, and PBO fibers. Of these examples, a thermoplastic resin sheet such as a polyethylene resin sheet having a melting point of 130°C or less, and a woven fabric, knitted fabric, or nonwoven fabric comprised of thermoplastic resin fibers such as polyethylene fibers having a melting point of 130°C or less are preferred examples due to improved integrity because they melt to be compatible with the resin coating layer 24 upon formation of the blocks. For example, the sheet-like base material 25 has a thickness of 0.1 to 10 mm.

As shown in FIG. 5A, the reinforcing structure member 23 may be formed by sewing the carbon fiber threads T in the sheet-like base material 25 or embroidering the sheet-like base material 25 with the carbon fibers. As shown in FIG. 5B, the reinforcing structure member 23 may be formed by sewing the carbon fiber threads T onto the sheet-like base material 25 with a sewing thread 26 comprised of a thin carbon fabric thread etc. and thus embroidering the sheet-like base material 25. Specifically, such a reinforcing structure member 23 can be obtained by, e.g., an embroidering method in which the carbon fiber threads T are arranged while being pressed against the sheet-like base material 25, and are instantaneously sewn on the sheet-like base material 25 with the sewing thread 26 to fix the positions of the carbon fiber threads T on the sheet-like base material 25. Such a reinforcing structure member 23 can be produced by an industrial lockstitch machine. In these cases, in order to suppress breakage of the carbon fibers, the distance between fold-back parts of the carbon fiber threads T is preferably 1 mm or more, more preferably 2 mm or more, and still more preferably 5 mm or more.

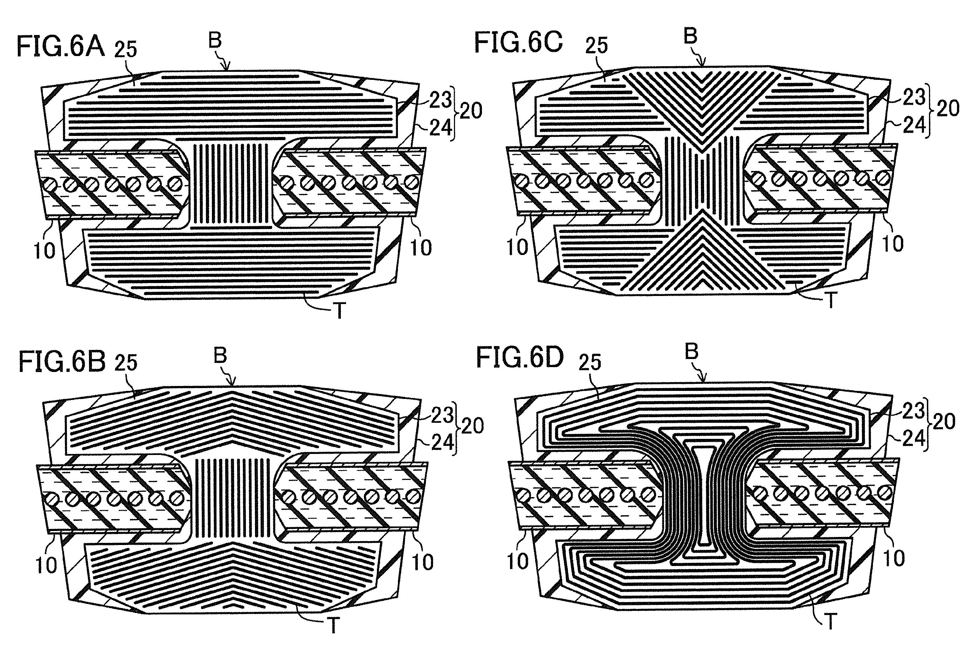

As alignment patterns of the carbon fiber threads T in these cases, as shown in FIG. 6A, the carbon fiber threads T are preferably arranged so as to extend substantially in the width direction of the belt in the upper and lower beams 23a, 23b, and to extend in the thickness direction of the belt in the center pillar 23c. As shown in FIG. 6B, in the upper and lower beams 23a, 23b, the carbon fiber threads T may be arranged so as to extend in the direction perpendicular to the side surface portions 21 forming the pulley contact surfaces. Stress is intensively applied to the upper and lower inner corners of each fitting portion 22 of the block 20 so as to widen the opening of the fitting portion 22. Accordingly, as shown in FIG. 6C, in the portions of the reinforcing structure member 23 which correspond to these corners, namely in the joint portions of the center pillar 23c and the upper and lower beams 23a, 23b, the carbon fiber threads T may be arranged so as to extend from the center pillar 23c obliquely outward toward both sides of the upper and lower beams 23a, 23b in order to enhance the reinforcing effect. As shown in FIG. 6D, multiple layers of the carbon fiber threads T may be provided along the contour of the sheet-like base material 25. In this pattern, the carbon fiber threads T reinforcing the upper and lower beams 23a, 23b and the center pillar 23c extend continuously, and the carbon fiber threads T are densely arranged in the joint portions of the center pillar 23c and the upper and lower beams 23a, 23b. A significant reinforcing effect can thus be achieved.

The reinforcing structure member 23 may be comprised of a prepreg in which the carbon fibers are arranged so as to be aligned in one direction. Specifically, for example, the reinforcing structure member 23 may be formed by cutting into individual pieces a prepreg sheet having the carbon fibers arranged so as to be aligned in one direction, and stacking and molding the pieces. In this case, the carbon fibers are preferably arranged so as to be aligned in the width direction of the belt.

The reinforcing structure member 23 may be comprised of a three-dimensional woven fabric comprised of the carbon fiber threads T.

In order to achieve a significant reinforcing effect for the blocks 20, the maximum length of the carbon fibers contained in the block 20 is preferably 1 mm or more, more preferably 2 mm or more, and still more preferably 5 mm or more. In order to achieve a significant reinforcing effect for the blocks 20, the block 20 preferably contains 15 to 95 volume%, more preferably 25 to 80 volume%, and still more preferably 30 to 75 volume% of the carbon fibers forming the reinforcing structure member 23.

A single reinforcing structure member 23 may be embedded in the block 20, or a stack of a plurality of reinforcing structure members 23 may be embedded in the block 20. In addition to the reinforcing structure member 23, a metal reinforcing member that is thinner than in conventional examples may be embedded in the block 20.

The resin coating layer 24 is comprised of a resin composition containing a matrix resin and a resin compounding agent. For example, the resin coating layer 24 has a thickness of 0.8 to 1.5 mm.

The matrix resin in the resin composition of the resin coating layer 24 may be either a thermosetting resin or a thermoplastic resin. Examples of the thermosetting resin include a phenol resin and an epoxy resin. Examples of the thermoplastic resin include a polyamide resin, a polyimide resin, and a polycarbonate resin. The matrix resin may be comprised of either a single substance or a plurality of substances. The matrix resin may be comprised of only a thermosetting resin, only a thermoplastic resin, or a mixture thereof. The matrix resin may further contain a rubber composition etc.

The resin coating layer 24 may be comprised of a carbon short fiber-reinforced resin composition containing a matrix resin and carbon short fibers. In particular, at least the side surface portions 21 forming the pulley contact surfaces are preferably comprised of a carbon short fiber-reinforced resin component containing a thermosetting resin and carbon short fibers, in order to improve resistance against friction and wear. The carbon short fibers may be polyacrylonitrile-based carbon short fibers (PAN-based carbon short fibers), pitch-based carbon short fibers, or a mixture thereof. For example, 10 to 40 parts by mass of the carbon short fibers are added per 100 parts by mass of the matrix resin. For example, the carbon short fibers contained in the resin coating layer 24 have a length of 50 to 150 µm.

The resin composition of the resin coating layer 24 may further contain graphite powder, para-aramid short fibers, etc. For example, the para-aramid short fibers has a fiber length of 1 to 3 mm, and 2 to 5 parts by mass of the para-aramid short fibers are added per 100 parts by mass of the matrix resin. For example, the graphite powder has a particle diameter of 5 to 10 µm, and 15 to 20 parts by mass of the graphite powder is added per 100 parts by mass of the matrix resin. In the case where the matrix resin is a thermosetting resin, a block forming resin material that forms the resin covering layer 24 may contain a hardening agent.

In the high load transmission V-belt B according to the present embodiment, the tension bands 10 are fitted in the fitting portions 22 of the plurality of blocks 20 so as to connect the blocks 20. Specifically, the tension band 10 is inserted into each fitting portion 22 of each block 22 from its chamfered side, and is fitted in each fitting portion 22 so that the upper fitting protrusion 22a on the upper surface of the fitting portion 22 fits in the upper fitting recess 11a on the upper surface of the tension band 10, that the lower fitting protrusion 22b on the lower surface of the fitting portion 22 fits in the lower fitting recess 11b on the lower surface of the tension band 10, and that one side of the tension band 10 contacts the inner end of the fitting portion 22. Thus, the structure is formed in which the plurality of blocks 20 are engaged with and fixed to the endless tension bands 10 at a fixed pitch in the longitudinal direction of the belt so as to be separated from each other, and the side surface portions 21 of the plurality of blocks 20 and the other side of each tension band 10, namely the exposed outer side of each tension band 10, are formed as the pulley contact surfaces.

In the high load transmission V-belt B according to the present embodiment, the clearance t₂ of the fitting portion 22 of the block 20 is slightly smaller than the thickness t₁ between the upper and lower fitting recesses 11a, 11b of the tension band 10. Accordingly, the tension bands 10 are fitted in the fitting portions 22 of the blocks 20 in a compressed state. For example, the interference "t₁ - t₂" is 0.006 to 0.150 mm, and the interference ratio α as the ratio of the interference "t₁ - t₂" to the clearance t₂ of the fitting portion 22 of the block 20 is preferably α = 1 to 5%, where α is given by "α = {(t₁ - t₂)/t₂} × 100."

Moreover, in the high load transmission V-belt B according to the present embodiment, the tension bands 10 are provided so as to protrude from the blocks 20. Such protruding tension bands 10 can reduce the impact that is caused when the high load transmission V-belt B enters the pulleys. The allowance Δd of the protrusion amount of the tension band 10 is, e.g., 0.02 to 0.25 mm, the insertion width w of the tension band 10 along the belt pitch line (cord center position) is, e.g., 6 to 13 mm, and the allowance ratio β as the ratio of the allowance Δd to the insertion width w of the tension band 10 at the meshing position with the block 20 along the belt pitch line is preferably β = 0.3 to 1.5%, where β is given by "β = (Δd/w) × 100." This allowance Δd can be easily measured by scanning the side surface of the high load transmission V-belt B by a contracer (contour measuring instrument).

According to the high load transmission V-belt B of the present embodiment thus configured, since the reinforcing structure member 23 of the block 20 is comprised of carbon fibers, the overall weight of the high load transmission V-belt B can be reduced as compared to conventional V-belts using aluminium reinforcing members. Specifically, the overall weight of the high load transmission V-belt B is preferably reduced so that the block 20 has a density of 1.5 to 2.2 g/cm³, more preferably 1.5 to 1.8 g/cm³, and still more preferably 1.4 to 1.6 g/cm³. The overall weight of the high load transmission V-belt B is preferably reduced so that mass per unit length of the belt is 0.25-0.46 g/mm.

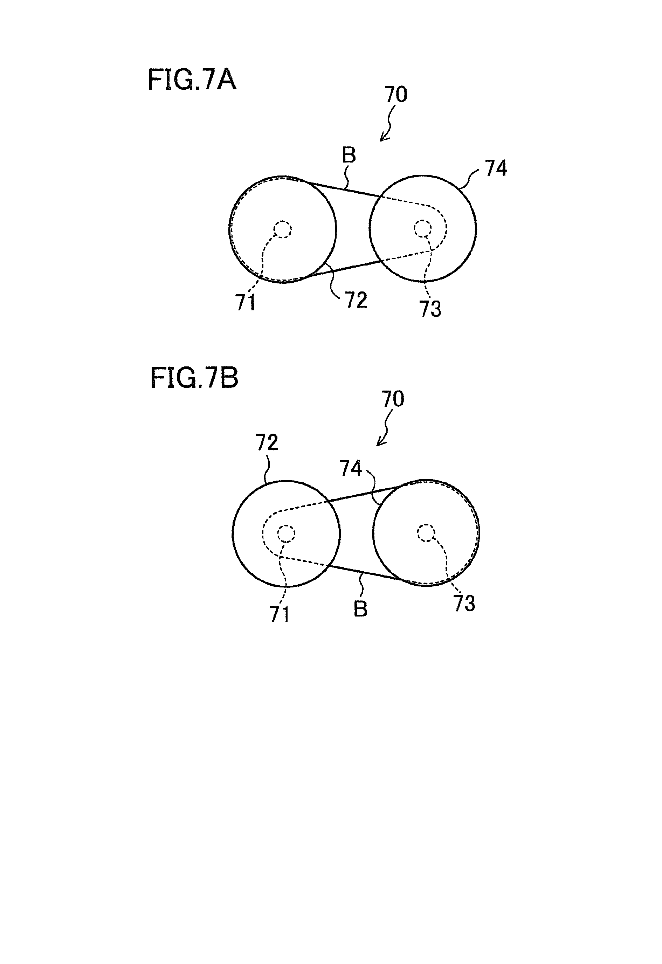

FIGS. 7A and 7B show a belt-type continuously variable transmission apparatus 70 using the high load transmission V-belt B according to the present embodiment.

This belt type continuously variable transmission apparatus 70 includes a drive shaft 71 and a driven shaft 73 placed parallel to the drive shaft 71. A drive pulley 72 is provided on the drive shaft 71, and a driven pulley 74 having substantially the same diameter as the drive pulley 72 is provided on the driven shaft 73. The drive pulley 72 includes a fixed sheave non-slidably fixed to the drive shaft 71 so as to rotate with the drive shaft 71, and a movable sheave slidably supported so as to face the fixed shaeve and to rotate with the drive shaft 71. Similarly, the driven pulley 74 includes a fixed sheave non-slidably fixed to the driven shaft 73 so as to rotate with the driven shaft 73, and a movable sheave slidably supported so as to face the fixed shaeve and to rotate with the driven shaft 73. Each of the drive pulley 72 and the driven pulley 74 has a V-groove formed between the fixed sheave and the movable sheave, and the high load transmission V-belt B is wrapped around the V-grooves of the drive pulley 72 and the driven pulley 74. Each of the drive pulley 72 and the driven pulley 74 is configured so that the pulley pitch diameter is variable in the range of, e.g., 40 to 150 mm.

In this belt-type continuously variable transmission apparatus 70, power required for belt transmission is supplied on the part of the drive shaft 71 and is consumed on the part of the driven shaft 73, and the running speed of the high load transmission V-belt B varies as the belt wrapping diameter of the drive pulley 72 and the belt wrapping diameter of the driven pulley 74 vary. Specifically, as the movable sheave of the drive pulley 72 is moved closer to the fixed sheave thereof and the movable sheave of the driven pulley 74 is moved away from the fixed sheave thereof, the belt wrapping diameter of the drive pulley 72 becomes larger than that of the driven pulley 74, as shown in FIG. 7A, whereby the high load transmission V-belt B runs at a high speed. On the other hand, as the movable sheave of the drive pulley 72 is moved away from the fixed sheave thereof and the movable sheave of the driven pulley 74 is moved closer to the fixed sheave thereof, the belt wrapping diameter of the drive pulley 72 becomes smaller than that of the driven pulley 74, as shown in FIG. 7B, whereby the high load transmission V-belt B runs at a low speed.

### (Manufacturing Method of High Load Transmission V-Belt B)

A manufacturing method of the high load transmission V-belt B will be described below.

### <Tension Band Production Process>

### Preparation of Uncrosslinked Rubber Composition

After a rubber component is placed into a rubber kneading machine such as a Banbury mixer and masticated therein, rubber compounding agents are added and the resultant mixture is kneaded. The uncrosslinked rubber composition thus obtained is processed into a sheet shape by a calender roll. The sheet-like uncrosslinked rubber composition is thus produced.

### Preparation of Cord

The cord 13 is produced by performing a treatment of heating twisted yarn or braided cord after soaking it in an RFL aqueous solution and/or a treatment of drying the twisted yarn or braided cord after soaking it in rubber cement. A treatment of drying the twisted yarn etc. after soaking it in an epoxy solution or an isocyanate solution may be performed before these treatments.

### Preparation of Upper and Lower Reinforcing Cloths

The upper and lower reinforcing cloths 14, 15 are produced by performing a treatment of heating a woven fabric, knitted fabric, or nonwoven fabric after soaking it in an RFL aqueous solution and/or a treatment of drying the woven fabric, knitted fabric, or nonwoven fabric after soaking it in rubber cement or after coating it with the rubber cement. A treatment of drying the woven fabric etc. after soaking it in an epoxy solution or an isocyanate solution may be performed before these treatments.

### Forming of Tension Band

A cylindrical mold, in which ridges each extending in the axial direction of the mold and having the shape of the lower fitting recess of the tension band 10 are formed in its outer peripheral surface at the same pitch in the circumferential direction, is covered with the lower reinforcing cloth 15 formed in a cylindrical shape, and a predetermined number of layers of the sheet-like uncrosslinked rubber composition are stacked thereon.

Then, the cylindrical mold is placed in a heating pressurizing apparatus, and this apparatus is set to a predetermined temperature and a predetermined pressure and held in this state for a predetermined time so that crosslinking of the uncrosslinked rubber composition proceeds to about the halfway point. At this time, crosslinking of the uncrosslinked rubber composition proceeds to about the halfway point, whereby the shape of the lower half of the shape retaining rubber layer 12 is formed. Moreover, the uncrosslinked rubber composition flows and the ridges of the cylindrical mold press the lower reinforcing cloth 15, whereby the lower fitting recesses 11b are formed.

Thereafter, the cylindrical mold is removed from the heating pressurizing apparatus. The cord 13 is helically wounded on the half-crosslinked rubber composition, a predetermined number of layers of the sheet-like uncrosslinked rubber composition are stacked thereon, and the upper reinforcing cloth 14 formed in a cylindrical shape is placed thereon.

Subsequently, a cylindrical sleeve, in which ridges each extending in the axial direction and having the shape of the upper fitting recess of the tension band 10 are formed in its inner peripheral surface at the same pitch in the circumferential direction, is placed on the outermost layer.

Then, the cylindrical mold having the materials placed thereon is placed in the heating pressurizing apparatus, and this apparatus is set to a predetermined temperature and a predetermined pressure and held in the state for a predetermined time. At this time, crosslinking of the half-crosslinked rubber composition and the uncrosslinked rubber composition proceeds, whereby the shape retaining rubber layer 12 is formed. Moreover, the uncrosslinked rubber composition flows and the ridges of the sleeve press the upper reinforcing cloth 14, whereby the upper fitting recesses 11a are formed. Since the adhesive on the surface of the cord 13 and the shape retaining rubber layer 12 diffuse into each other, the cord 13 is integrally bonded to the shape retaining rubber layer 12. Since the adhesive adhering to the upper and lower reinforcing cloths 14, 15 and the shape retaining layer 12 diffuse into each other, the upper and lower reinforcing cloths 14, 15 are integrally bonded to the shape retaining rubber layer 12.

A cylindrical slab is thus molded on the surface of the cylindrical mold.

Lastly, the cylindrical mold is removed from the heating pressurizing apparatus, and the cylindrical slab formed on the peripheral surface of the cylindrical mold is removed. The cylindrical slab is cut into rings having a predetermined width, and the rings are chamfered etc. The tension bands 10 are thus produced.

### <Block Molding Step>

### Preparation of Block Molding Resin Material

A matrix resin and a resin compounding agent are placed into a resin kneader such as a biaxial kneader and are kneaded therein. The collected kneaded mixture is crushed and pulverized or granulated to obtain a block molding resin material.

### Block Molding

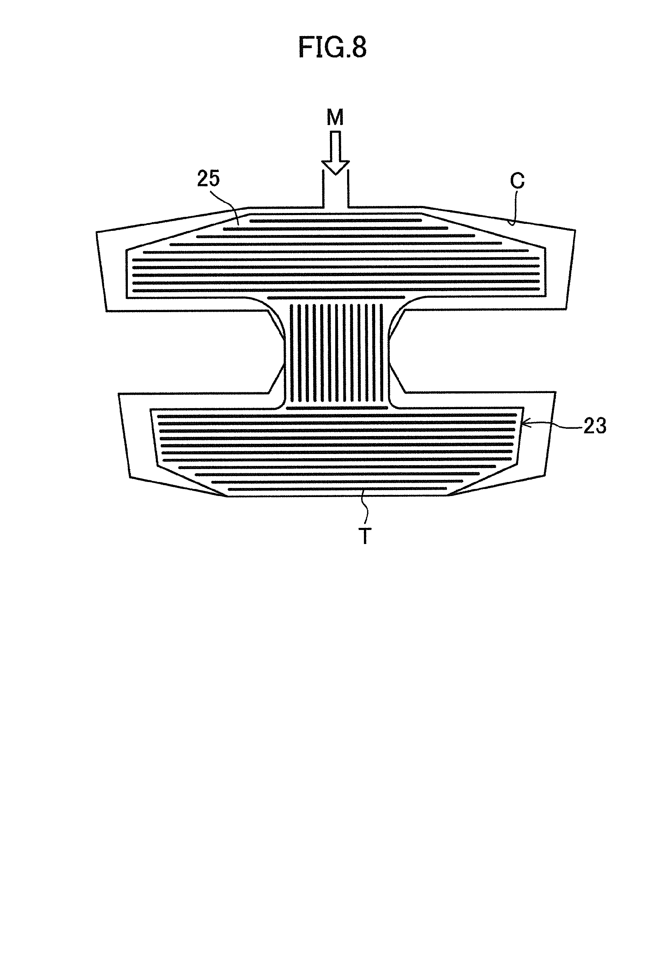

As shown in FIG. 8, the reinforcing structure member 23 is placed in a cavity C of a mold 80 of a block molding machine, and the mold 80 is clamped. Then, an unsolidified block molding resin material M for forming the resin coating layer 24 is supplied into the cavity C, whereby the block 20 is molded.

In order to increase impregnation of the unsolidified resin material between carbon fibers forming the reinforcing structure member 23, the unsolidified resin material having lower viscosity is more preferable. This can be controlled by changing the molding conditions such as a molding temperature.

This block molding step may be performed by injection molding. However, for the reason similar to that described above, the block molding step is preferably performed by reaction injection molding (RIN) or resin transfer molding (RTM) by using the unsolidified block molding resin material M having low viscosity. In order to suppress formation of voids in the block 20, the block molding step is preferably performed by vacuum assisted resin transfer molding (VaRTM).

In the case where the reinforcing structure member 23 is comprised of composite yarns of carbon fibers and thermoplastic resin fibers, this block molding step may be performed by press forming because the thermoplastic resin fibers around the carbon fibers melt by heat and are impregnated between the carbon fibers.

After the mold 80 is cooled, the mold 80 is opened to remove the block 20. In the case where the matrix resin is a thermosetting resin, it is preferable to sufficiently harden the resin coating layer 24 by performing annealing etc. on the block 20. The anneal temperature is, e.g., 190 to 195°C, and the anneal time is, e.g., 2 to 4 hours.

### <Assembly Step>

One of the tension bands 10 is inserted into one of the fitting portions 22 of the block 20 so that the upper and lower fitting protrusions 22a, 22b of the block 20 correspond to the upper and lower fitting recesses 11a, 11b of the tension band 10 and that the upper and lower fitting protrusions 22a, 22b are fitted in the upper and lower fitting recesses 11a, 11b. The block 20 is thus engaged with the tension band 10. This operation is performed along the entire circumference of the tension band 10. Similarly, the other tension band 10 is inserted into the other fitting portion 22 of the block 20. The high load transmission V-belt B is thus produced.

### Examples

### (High Load Transmission V-Belt)

High load transmission V-belts of first to fifth examples and first to fourth comparative examples were produced. Their respective configurations are also shown in Table 1.

### <First Example>

A block molding resin material was prepared by mixing 72.5 parts by mass of PAN-based carbon short fibers, 17.5 parts by mass of graphite powder, 2.8 parts by mass of para-aramid short fibers, and 15 parts by mass of hexamine as a hardening agent with 100 parts by mass of a phenol resin (50 mass% of a phenol aralkyl resin and 50 mass% of a novolak phenol resin) and kneading the mixture. This block molding resin material had a density of 1.44 g/cm³.

A reinforcing structure member was prepared by stacking eleven prepreg sheets (unidirectional prepreg made by TOHO TENAX Co., Ltd., trade name: HTS40, content of carbon fibers: 60%, thickness: 0.19 mm) so that carbon fibers were aligned in one direction, and cutting and forming the stack into a block shape so that the alignment direction of the carbon fibers corresponded to the width direction of the belt. This reinforcing structure member had a density of 1.51 g/cm³.

This reinforcing structure member was placed in a cavity of a mold of a block molding machine, and the mold was clamped. Then, the molten block molding resin material was injected into the cavity to mold a block containing 60 volume% of the carbon fibers forming the reinforcing structure member. This block had a density of 1.50 g/cm³. The maximum length of the carbon fibers contained in the block was 1.95 mm.

A high load transmission V-belt having a configuration similar to that of the above embodiment was produced as the first example by using the blocks.

In the first example, the belt length was 612 mm, the belt pitch width was 25 mm, the belt thickness was 12.8 mm, and the belt angle was 26°. The number of blocks was 204, the block pitch was 3 mm, and the interval between the blocks was 0.05 mm. The mass of the belt of the first example was 215.5 g (total mass of the tension bands: 78.0 g, total mass of the blocks: 137.5 g). The mass per unit length of the belt was therefore 0.35 kg/m.

The shape retaining layer of each tension band was formed by a hydrogenated acrylonitrile rubber composition reinforced by zinc dimethacrylate, the cord was formed by a braided cord of aramid fibers, and the upper and lower reinforcing cloths are formed by a nylon fiber woven fabric.

### <Second Example>

A high load transmission V-belt having the same configuration as the first example except for the reinforcing structure member was produced as the second example. A polyethylene sheet having a thickness of 200 µm was used as a sheet-like base material formed in a block shape, and this polyethylene sheet was embroidered with filament yarns of carbon fibers (made by TOHO TENAX Co., Ltd., trade name: HTS40, 7 µ × 3,000 filaments, 200 tex) so that the alignment direction of the carbon fibers corresponded to the width direction of the belt. The embroidered polyethylene sheet thus obtained was used as the reinforcing structure member.

The mass of the belt of the second example was 215.5 g (total mass of the tension bands: 78.0 g, total mass of the blocks: 137.5 g). The mass per unit length of the belt was therefore 0.35 kg/m.

The reinforcing structure member had a density of 1.51 g/cm³, the block had a density of 1.50 g/cm³, the maximum length of the carbon fibers contained in the block was 1.80 mm, and the block contained 60 volume% of the carbon fibers forming the reinforcing structure member.

### <Third Example>

A high load transmission V-belt having the same configuration as the first example except for the reinforcing structure member was produced as the third example. A polyethylene sheet having a thickness of 200 µm was used as a sheet-like base material formed in a block shape. Filament yarns of carbon fibers and filament yarns of polypropylene fibers were paralleled at a ratio of 1 to 1, and polypropylene fibers were wrapped around the paralleled filament yarns to produce composite yarns (with the same thickness as the filament yarns of the carbon fibers of the second example). This polyethylene sheet was embroidered with the composite yarns so that the alignment direction of the carbon fibers corresponded to the width direction of the belt. The embroidered polyethylene sheet thus obtained was used as the reinforcing structure member.

The mass of the belt of the third example was 215.5 g (total mass of the tension bands: 78.0 g, total mass of the blocks: 137.5 g). The mass per unit length of the belt was therefore 0.35 kg/m.

The reinforcing structure member had a density of 1.51 g/cm³, the block had a density of 1.50 g/cm³, the maximum length of the carbon fibers contained in the block was 1.90 mm, and the block contained 60 volume% of the carbon fibers forming the reinforcing structure member.

### <Fourth Example>

A high load transmission V-belt having the same configuration as the first example except for the reinforcing structure member and the belt pitch width was produced as the fourth example. A polyethylene sheet having a thickness of 200 µm was used as a sheet-like base material formed in a block shape, and this polyethylene sheet was embroidered with spun yarns of carbon fibers (with the same thickness as the filament yarns of the carbon fibers of the second example) so that the alignment direction of the carbon fibers corresponded to the width direction of the belt. The embroidered polyethylene sheet thus obtained was used as the reinforcing structure member. The block contained 35 volume% of the carbon fibers forming the reinforcing structure member, and the belt pitch width was 20 mm.

The mass of the belt of the fourth example was 186.1 g (total mass of the tension bands: 63.0 g, total mass of the blocks: 123.1 g). The mass per unit length of the belt was therefore 0.30 kg/m.

The reinforcing structure member had a density of 1.32 g/cm³, the block had a density of 1.34 g/cm³, and the maximum length of the carbon fibers contained in the block was 1.90 mm.

### <Fifth Example>

A high load transmission V-belt having the same configuration as the first example except for the reinforcing structure member and the belt pitch width was produced as the fifth example. A polyethylene sheet having a thickness of 200 µm was used as a sheet-like base material formed in a block shape, and this polyethylene sheet was embroidered with spun yarns of carbon fibers (with the same thickness as the filament yarns of the carbon fibers of the second example) so that the alignment direction of the carbon fibers corresponded to the width direction of the belt. The embroidered polyethylene sheet thus obtained was used as the reinforcing structure member. The block contained 95 volume% of the carbon fibers forming the reinforcing structure member, and the belt pitch width was 20 mm.

The mass of the belt of the fifth example was 219.3 g (total mass of the tension bands: 63.0 g, total mass of the blocks: 156.3 g). The mass per unit length of the belt was therefore 0.36 kg/m.

The reinforcing structure member had a density of 1.76 g/cm³, the block had a density of 1.70 g/cm³, and the maximum length of the carbon fibers contained in the block was 1.90 mm.

### <First Comparative Example>

A high load transmission V-belt having the same configuration as the first example except for the use of a metal reinforcing member instead of the reinforcing structure member was produced as the first comparative example. The metal reinforcing member was comprised of duralumin of A2024P T361 in JIS H 4000.

The mass of the belt of the first comparative example was 305.3 g (total mass of the tension bands: 78.0 g, total mass of the blocks: 227.3 g). The mass per unit length of the belt was therefore 0.50 kg/m.

The metal reinforcing member had a density of 2.70 g/cm³, the block had a density of 2.48 g/cm³, and the maximum length of the carbon fibers contained in the block was 0.1 mm.

### <Second Comparative Example>

A high load transmission V-belt having the same configuration as the first example except for the block forming resin material and non-embedding of the reinforcing structure member in the blocks was produced as the second comparative example. The block forming resin material used in the second comparative example was produced by mixing 30 parts by mass of PAN-based carbon short fibers to 100 parts by mass of 4,6 nylon resin as a matrix resin and kneading the mixture. The blocks were produced without embedding the reinforcing structure member therein.

The mass of the belt of the second comparative example was 210.2 g (total mass of the tension bands: 78.0 g, total mass of the blocks: 210.2 g). The mass per unit length of the belt was therefore 0.34 kg/m.

The block had a density of 1.44 g/cm³, and the maximum length of the carbon fibers contained in the block was 0.1 mm.

### <Third Comparative Example>

A high load transmission V-belt having the same configuration as the first comparative example except for the belt pitch width was produced as the third comparative example. The belt pitch width of the third comparative example was 20 mm.

The mass of the belt of the third comparative example was 216.5 g (total mass of the tension bands: 63.0 g, total mass of the blocks: 153.5 g). The mass per unit length of the belt was therefore 0.35 kg/m.

The block had a density of 2.28 g/cm³, and the maximum length of the carbon fibers contained in the block was 0.1 mm.

### <Fourth Comparative Example>

A high load transmission V-belt having the same configuration as the second comparative example except for the belt pitch width was produced as the fourth comparative example. The belt pitch width of the fourth comparative example was 20 mm.

The mass of the belt of the fourth comparative example was 159.9 g (total mass of the tension bands: 63.0 g, total mass of the blocks: 96.9 g). The mass per unit length of the belt was therefore 0.26 kg/m.

The block had a density of 1.44 g/cm³, and the maximum length of the carbon fibers contained in the block was 0.1 mm.

**[Table 1]**

| | Examples | | | | | Comparative Examples | | | |
|---|---|---|---|---|---|---|---|---|---|
| | 1 | 2 | 3 | 4 | 5 | 1 | 2 | 3 | 4 |
| Reinforcing Member | prepreg | filament yarns | composite yarns | spun yarns | spun yarns | aluminium | - | aluminium | - |
| Reinforcing Member Density(g/cm³) | 1.51 | 1.51 | 1.51 | 1.32 | 1.76 | 2.70 | - | 2.70 | - |
| Resin Coating Layer | phenol | phenol | phenol | phenol | phenol | phenol | 4,6 nylon | phenol | 4,6 nylon |
| Resin Coating Layer Density(g/cm³) | 1.44 | 1.44 | 1.44 | 1.44 | 1.44 | 1.44 | 1.44 | 1.44 | 1.44 |
| Block Density (g/cm³) | 1.50 | 1.50 | 1.50 | 1.34 | 1.70 | 2.48 | 1.44 | 2.28 | 1.44 |
| Carbon Fiber Maximum Length (mm) | 1.95 | 1.80 | 1.90 | 1.90 | 1.90 | 0.1 | 0.1 | 0.1 | 0.1 |
| Carbon Fiber Content (volume%) | 60 | 60 | 60 | 35 | 95 | - | - | - | - |
| Belt Length (mm) | 612 | 612 | 612 | 612 | 612 | 612 | 612 | 612 | 612 |
| Belt Pitch Width (mm) | 25 | 25 | 25 | 20 | 20 | 25 | 25 | 20 | 20 |
| Belt Thickness (mm) | 12.8 | 12.8 | 12.8 | 12.8 | 12.8 | 12.8 | 12.8 | 12.8 | 12.8 |
| Belt Angle (°) | 26 | 26 | 26 | 26 | 26 | 26 | 26 | 26 | 26 |
| Number of Blocks | 204 | 204 | 204 | 204 | 204 | 204 | 204 | 204 | 204 |
| Block Pitch (mm) | 3 | 3 | 3 | 3 | 3 | 3 | 3 | 3 | 3 |
| Block Interval (mm) | 0.05 | 0.05 | 0.05 | 0.05 | 0.05 | 0.05 | 0.05 | 0.05 | 0.05 |
| Belt Mass (g) | 215.5 | 215.5 | 215.5 | 186.1 | 219.3 | 305.3 | 210.2 | 216.5 | 159.9 |
| Total Tension Band Mass (g) | 78 | 78 | 78 | 63 | 63 | 78 | 78 | 63 | 63 |
| Total Block Mass (g) | 137.5 | 137.5 | 137.5 | 123.1 | 156.3 | 227.3 | 132.2 | 153.5 | 96.9 |
| Mass per Belt Unit Length (g/mm) | 0.35 | 0.35 | 0.35 | 0.30 | 0.36 | 0.50 | 0.34 | 0.35 | 0.26 |

### (Test Evaluation Method)

A belt running test for test evaluation of the following factors was conducted by using a belt running tester containing a drive pulley and a driven pulley in a chamber.

### <Belt Transmission Efficiency>

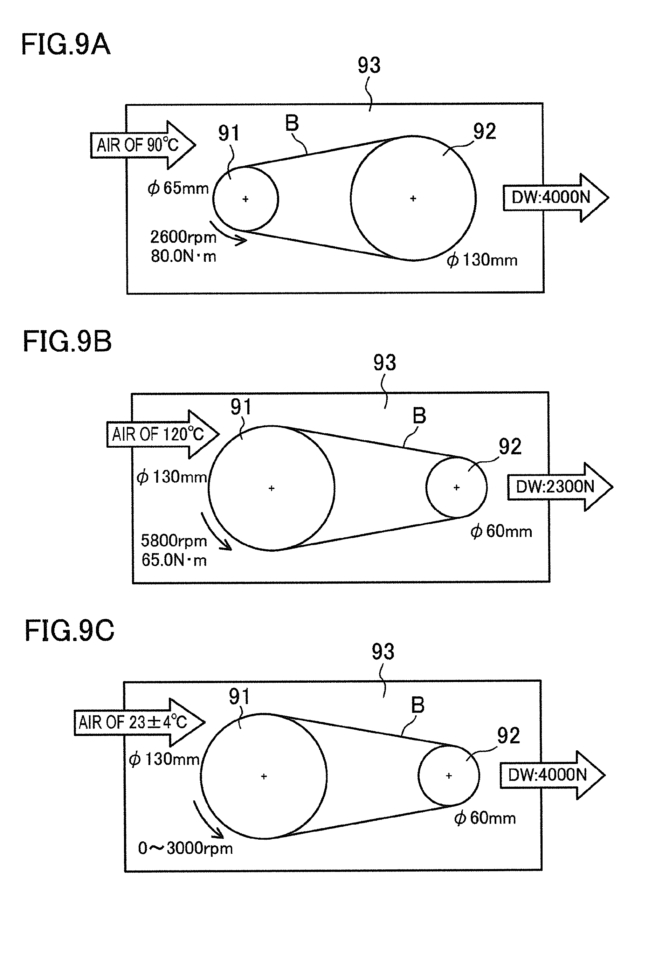

As shown in FIG. 9A, each of the high load transmission V-belts B of the first to fifth examples and the first to fourth comparative examples was wound around a drive pulley 91 having a pulley pitch diameter (the diameter at the cord position when the high load transmission V-belt B was wounded around the pulley) of 65.0 mm and a driven pulley 92 having a pulley pitch diameter of 130 mm, and a dead weight (DW) of 4,000 N was applied to the driven pulley 92. The drive pulley 91 was rotated at a rotational speed of 2,600 ± 60 rpm with drive shaft torque of 80.0 N·m while blowing air of 90°C into a chamber 93. The input rotational speed N₁, the output rotational speed N₂, the input torque Tr₁, and the output torque Tr₂ at this time were obtained, and the belt transmission efficiency given by "(N₂ × Tr₂)/(N₁ × Tr₁) × 100" was calculated.

### <High-Speed High-Load Heat Resistance Durability Life>

As shown in FIG. 9B, each of the high load transmission V-belts B of the first to fifth examples and the first to fourth comparative examples was wound around the drive pulley 91 having a pulley pitch diameter of 130 mm and the driven pulley 92 having a pulley pitch diameter of 60.0 mm, and a dead weight (DW) of 2,300 N was applied to the driven pulley 92. The drive pulley 91 was rotated at a rotational speed of 5,800 ± 60 rpm with drive shaft torque of 65.0 N·m while blowing air of 120°C into the chamber 93. The belt was caused to run until the belt fractured, with the maximum running time being set to 500 hours. The running time until the belt fractured was measured as the high-speed high-load heat resistance durability life.

### <Belt Noise>

As shown in FIG. 9C, each of the high load transmission V-belts B of the first to fifth examples and the first to fourth comparative examples was wound around the drive pulley 91 having a pulley pitch diameter of 130 mm and the driven pulley 92 having a pulley pitch diameter of 60.0 mm, and a dead weight (DW) of 4,000 N was applied to the driven pulley 92. No load was applied to the drive shaft, and the drive pulley 91 was rotated while varying its rotational speed in the range of 0 to 3,000 rpm and while blowing air of 23±4°C into the chamber 93. The maximum value of noise measured at this time with a noise measuring instrument at the position of 10 mm from the side surface of the belt in the center of the belt span was used as belt noise.

### (Test Evaluation Result)

Table 2 shows a test result.

**[Table 2]**

| | Examples | | | | | Comparative Examples | | | |
|---|---|---|---|---|---|---|---|---|---|
| | 1 | 2 | 3 | 4 | 5 | 1 | 2 | 3 | 4 |
| Belt Transmission Efficiency (%) | 98 | 97 | 98 | 98 | 98 | 95 | 97 | 95 | 97 |
| High-Speed High-Load Heat Resistance Durability Life (h) | >500 | >500 | >500 | >500 | >500 | >500 | 24 | >500 | 20 |
| Belt Noise (dB) | 74 | 75 | 75 | 76 | 76 | 90 | 75 | 85 | 75 |

The belt Transmission efficiency was 98% for the first example, 97% for the second example, 98% for the third example, 98% for the fourth example, 98% for the fifth example, 95% for the first comparative example, 97% for the second comparative example, 95% for the third comparative example, and 97% for the fourth comparative example.

The high-speed high-load heat resistance durability life was 500 hours or more for the first to fifth examples, 500 hours or more for the first comparative example, 24 hours (the blocks fractured) for the second comparative example, 500 hours or more for the third comparative example, and 20 hours (the blocks fractured) for the fourth comparative example.

The belt noise was 74 dB for the first example, 75 dB for the second example, 75 dB for the third example, 76 dB for the fourth example, 76 dB for the fifth example, 90 dB for the first comparative example, 75 dB for the second comparative example, 85 dB for the third comparative example, and 75 dB for the fourth comparative example.

### INDUSTRIAL APPLICABILITY

The present invention is useful for high load transmission V-belts and manufacturing methods thereof.

### DESCRIPTION OF REFERENCE CHARACTERS

- B: High Load Transmission V-Belt
- C: Cavity
- T: Carbon Fiber Thread
- 10: Tension Band
- 11a: Upper Fitting Recess
- 11b: Lower Fitting Recess
- 12: Shape Retaining Rubber Layer
- 13: Cord
- 14: Upper Reinforcing Cloth
- 15: Lower Reinforcing Cloth
- 20: Block
- 21: Side Surface Portion
- 22: Fitting Portion
- 22a: Upper Fitting Protrusion
- 22b: Lower Fitting Protrusion
- 23: Reinforcing Structure Member
- 23a: Upper Beam
- 23b: Lower Beam
- 23c: Center Pillar
- 24: Resin Coating Layer
- 25: Sheet-Like Base Material
- 26: Sewing Thread
- 70: Belt-Type Continuously Variable Transmission Apparatus
- 71: Drive Shaft
- 72: Drive Pulley
- 73: Driven Shaft
- 74: Driven Pulley
- 80: Mold
- 91: Drive Pulley
- 92: Driven Pulley
- 93: Chamber

## Claims

1. A high load transmission V-belt, comprising:
an endless tension band; and
a plurality of blocks arranged side by side in a longitudinal direction of the tension band and each engaged with the tension band, wherein
each of the plurality of blocks has a reinforcing structure member comprised of carbon fibers, and a resin coating layer provided so as to coat the reinforcing structure member.

2. The high load transmission V-belt of claim 1, wherein
the reinforcing structure member is formed by fixing the carbon fibers to a sheet-like base material.

3. The high load transmission V-belt of claim 2, wherein
the reinforcing structure member is formed by embroidering the sheet-like base material with the carbon fibers.

4. The high load transmission V-belt of claim 1, wherein
the reinforcing structure member is comprised of a prepreg in which the carbon fibers are arranged so as to be aligned in one direction.

5. The high load transmission V-belt of claim 4, wherein
the reinforcing structure member is provided so that the carbon fibers are aligned in a width direction of the belt.

6. The high load transmission V-belt of any one of claims 1 to 5, wherein
the reinforcing structure member is comprised of filament yarns or spun yarns of the carbon fibers.

7. The high load transmission V-belt of any one of claims 1 to 6, wherein
the reinforcing structure member is comprised of the carbon fibers and fibers other than the carbon fibers.

8. The high load transmission V-belt of any one of claims 1 to 7, wherein
mass per unit length of the belt is 0.25 to 0.46 g/mm.

9. The high load transmission V-belt of any one of claims 1 to 8, wherein
the block has a density of 1.5 to 2.2 g/cm³.

10. The high load transmission V-belt of any one of claims 1 to 9, wherein
a maximum length of the carbon fibers contained in the block is 1 mm or more.

11. The high load transmission V-belt of any one of claims 1 to 10, wherein
the block contains 15 to 95 volume% of the carbon fibers forming the reinforcing structure member.

12. The high load transmission V-belt of any one of claims 1 to 11, wherein
at least a part of the resin coating layer which forms a pulley contact surface is comprised of a thermosetting resin containing carbon short fibers.

13. A method for manufacturing a high load transmission V-belt including an endless tension band, and a plurality of blocks arranged side by side in a longitudinal direction of the tension band and each engaged with the tension band, comprising:
a block molding step of placing a reinforcing structure member comprised of carbon fibers in a cavity of a block forming mold, and supplying an unsolidified resin material into the cavity.

14. The method of claim 13, wherein
the block molding step is performed by RIM, RTM, or VaRTM.

15. The method of claim 13, wherein
the reinforcing structure member is comprised of composite yarns of the carbon fibers and thermoplastic resin fibers, and
the block molding step is performed by press forming.
